(19)

Europäisches
Patentamt

European
Patent Office

Office européen
des brevets

(11)  **EP 4 060 890 A1**

(12)  **EUROPEAN PATENT APPLICATION**

(43) Date of publication:
   **21.09.2022  Bulletin 2022/38**

(51) International Patent Classification (IPC):
   **H02P 21/13** $^{(2006.01)}$   **H02P 21/02** $^{(2006.01)}$

(21) Application number: **22160997.7**

(22) Date of filing: **09.03.2022**

(52) Cooperative Patent Classification (CPC):
   **H02P 21/13; H02P 21/02;** H02P 2207/05

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **KH MA MD TN**

(30) Priority:  **09.03.2021  IN 202141009891**

(71) Applicant: **TVS Motor Company Limited
   600006 Chennai (IN)**

(72) Inventors:
   • **Nair, Sreeju S
     600 006 Chennai (IN)**
   • **Choudhary, Sourabh
     600 006 Chennai (IN)**
   • **Dey, Ankan
     600 006 Chennai (IN)**
   • **V, Jayajothi Johnson
     600 006 Chennai (IN)**

(74) Representative: **Patentanwaltskanzlei
   Matschnig & Forsthuber OG
   Biberstraße 22
   Postfach 36
   1010 Wien (AT)**

(54)   **SYSTEM FOR CONTROLLING A SYNCHRONOUS MACHINE AND METHOD THEREOF**

(57)   The present invention relates to a system (100) for controlling a synchronous machine (110) and a method (200) thereof. The system comprises: a flux linkage estimation module (120) for estimating one or more values of flux linkage ($\Psi$) in the synchronous machine (110) based on a regression-based model, an iron loss estimation module (130) for estimating one or more values of iron loss ($P_{Fe}$) in the synchronous machine (110) and a control module (140). The control module (140) receives the one or more values of flux linkage ($\Psi$) from the flux linkage estimation module (120) and the one or more values of iron loss ($P_{Fe}$) from the iron loss estimation module (130), and determines optimum current set points along a direct axis ($I_d^*$) and a quadrature axis ($I_q^*$) based on the values of flux linkage ($\Psi$) and iron loss ($P_{Fe}$) thereby controlling the synchronous machine (110).

Figure 1

**Description**

**FIELD OF THE INVENTION**

The present invention relates to a system for controlling a synchronous machine and method thereof.

**BACKGROUND OF THE INVENTION**

In conventional systems and methods for torque control of an Interior Permanent Magnet Synchronous Motor (IPMSM), Look-up Table (LUT) methods are generally adopted. The LUT methods for control of an IPMSM are computationally simple as no complex calculations in real time are required. However, construction of such Look-up tables prior to their usage remains a time-consuming and cost-intensive process. Further, for LUT methods to be effective for torque control of an IPMSM, a large memory usage and a highly accurate interpolation algorithm is required.

In other attempts for torque control of an IPMSM, a Least Square Method is known to be used for co-efficient fitting in the algorithm. However, these methods can provoke and are prone to approximation errors.

An efficient control of an IPMSM requires loss minimisation control and machine efficiency map generation. For the development of this loss minimization control as well as the machine efficiency map generation, an accurate prediction of iron loss is required. However, conventional methods of torque control for an IPMSM using Maximum Torque per Ampere (MTPA) do not account for an iron loss estimation. Especially, accuracy of the existing methods for iron loss prediction differs significantly in the middle of the torque-speed range of the speed-torque envelop. This limitation highly restricts usage of conventional methods as iron loss can not be estimated for a wide range of torque and speed. Considering core saturation and cross-coupling at various ranges of speed of the synchronous machine, it is important that iron loss be considered for an accurate torque control of a synchronous machine.

It has been observed that iron loss is significant at high speed compared to copper loss. Hence especially for the application of synchronous machine in an Electric Vehicle, which frequently subjects the synchronous machine to high-speed operations, inclusion of iron loss effect for MTPA based torque control of the synchronous machine becomes necessary. More specifically, an accurate iron loss estimation for the entire torque-speed range is necessary during machine running condition as well as experimental verification stage of the Electric Vehicle.

Specifically, Electric Vehicles requires a system and method of torque control which has low computational burden and resultantly can generate fast and dynamic responses to the torque demand and can generate responses with high torque estimation accuracy.

Thus, there is a need in the art for a system and method of control of synchronous machine which addresses at least the aforementioned problems.

**SUMMARY OF THE INVENTION**

In one aspect, the present invention is directed to a system for controlling a synchronous machine. The system has a flux linkage estimation module for estimating one or more values of flux linkage in the synchronous machine based on a regression-based model, an iron loss estimation module for estimating one or more values of iron loss in the synchronous machine, and a control module. The control module receives the one or more values of flux linkage from the flux linkage estimation module and the one or more values of iron loss from the iron loss estimation module, and determines optimum current set points along a direct axis ($I_d$*) and a quadrature axis ($I_q$*) based on the values of flux linkage and iron loss. The control module then controls the synchronous machine based on the determined optimum current set points.

In an embodiment of the invention, the synchronous machine is an Interior Permanent Magnet Synchronous Motor.

In another embodiment of the invention, the flux linkage estimation module based on the regression-based model is trained using one or more training values of flux linkage in the direct-axis ($\Psi d$) of a rotor of the synchronous machine and one or more training values of flux linkage in the quadrature-axis ($\Psi_q$) of the rotor of the synchronous machine, in a steady state prior to operation of the synchronous machine.

In another embodiment of the invention, the training values of flux linkage in the direct-axis ($\Psi_d$) and the training values of flux linkage in the quadrature-axis ($\Psi_q$) are based on the training values of flux linkage corresponding to six distinct equally distributed values of current in the quadrature axis ($I_q$) of the rotor and five distinct equally distributed values of current in the direct axis ($I_d$) of the rotor, in a steady state prior to operation of the synchronous machine.

In a further embodiment of the invention, during operation of the synchronous machine, the flux linkage estimation module estimates the values of flux linkage in the direct-axis ($\Psi d$) and the values of flux linkage in the quadrature-axis ($\Psi_q$) for a combination of input values of current in the direct axis ($I_d$) of the rotor and current in the quadrature axis ($I_q$) of the rotor.

In a further embodiment of the invention, the iron loss estimation module estimates the iron loss based on at least two out of: value of an iron loss at short circuit condition, value of an iron loss at open circuit condition, and value of an iron loss at base speed MTPF (Maximum Torque Per Flux) condition. Herein, the iron loss estimation module estimates the iron loss based on: the value of iron loss at short circuit condition, and the value of iron loss at base speed MTPF condition, if a torque demand is greater than 5% of a peak torque of the synchronous machine. Further, the iron loss estimation module estimates the iron loss based on: the value of the iron loss at short circuit condition, and the value of iron loss at open circuit condition, if the torque demand is less than 5% of the peak torque of the synchronous machine.

In a further embodiment of the invention, the system further has a first co-ordinate converter for converting a combination of input values of current in a first phase in the synchronous machine ($I_a$), a second phase in the synchronous machine ($I_b$), and a third phase in the synchronous machine ($I_e$) into the combination of input values of current in the direct axis ($I_d$) of the rotor and current in the quadrature axis ($I_q$) of the rotor.

In another embodiment of the invention, the system has a second coordinate converter for converting a combination of input values of voltage in a first phase in the synchronous machine ($V_a$), a second phase in the synchronous machine ($V_b$), and a third phase in the synchronous machine ($V_c$) into a combination of input values of voltage in the direct axis ($V_d$) of the rotor and current in the quadrature axis ($V_q$) of the rotor.

In another embodiment of the invention, the system has a voltage command generator for converting the determined optimum current set point ($I_d*$, $I_q*$) into an optimum voltage set point ($V_d*$, $V_q*$).

In a further embodiment of the invention, the system has a third coordinate converter for converting the optimum voltage set point ($V_d*$, $V_q*$) into an optimum voltage set point in an alpha-beta frame ($V_\alpha*$, $V_\beta*$).

In another embodiment of the invention, the system has a Space Vector Pulse Width Modulation Power Converter configured to: receive the optimum voltage set point ($V_\alpha*$, $V_\beta*$) for driving the synchronous machine via a DC power supply.

In another aspect, the present invention is directed to a method for controlling a synchronous machine. The method comprises the steps of estimating one or more values of flux linkage in the synchronous machine based on a regression-based model by a flux linkage estimation module, estimating one or more values of iron loss in the synchronous machine by an iron loss estimation module, receiving the one or more values of flux linkage from the flux linkage estimation module and the one or more values of iron loss from the iron loss estimation module by a control module, and determining optimum current set points along a direct axis ($I_d*$) and a quadrature axis ($I_q*$) based on the values of flux linkage and iron loss thereby controlling the synchronous machine by the control module.

In a further aspect, the present invention is directed at a method of flux linkage estimation for a synchronous machine. The method comprises the steps of receiving one or more training values of flux linkage in a direct axis ($\Psi_d$) of a rotor of the synchronous machine and one or more training values of flux linkage in a quadrature axis of the rotor of the synchronous machine ($\Psi_q$) based on six distinct equally distributed values of rotor current in the quadrature axis ($I_q$) and five distinct equally distributed values of rotor current in the direct axis ($I_d$), in a steady state prior to operation of the synchronous machine. The second step involves sampling of the training values of flux linkage. The third step involves splitting the sampled training values into a first training data set with known training values of flux linkage in the direct axis ($\Psi_d$) corresponding to values of rotor current ($I_d$, $I_q$), and a second training data set with known training values of flux linkage in the quadrature axis ($\Psi_q$) corresponding to values of rotor current ($I_d$, $I_q$). The fourth step involves using the first training data set and the second training data set to train a regression-based model. The fifth step involves evaluating the regression-based model based on an R score, by the flux linkage estimation module. The final step involves estimating during operation of the synchronous machine, based on the regression-based model, one or more values of flux linkage in the direct axis of the rotor ($\Psi_d$) and one or more values of flux linkage in the quadrature axis of the rotor ($\Psi_q$) for a combination of input values of rotor current the direct axis ($I_d$) and rotor current in the quadrature axis ($I_q$).

In another aspect, the present invention relates to a method of iron loss estimation for a synchronous machine. The method comprises the first step of receiving values of an iron loss at short circuit condition, an iron loss at open circuit condition, and an iron loss at base speed MTPF (Maximum Torque Per Flux) condition. The second step involves checking whether a torque demand is above or below 5% of a peak torque of the synchronous machine. Based on the result of the second step, the third step involves estimating iron loss based on values of the iron loss at short circuit condition and the iron loss at base speed MTPF condition, if the torque demand is above 5% of the peak torque. Alternatively, the third step involves estimating iron loss based on values of the iron loss at short circuit condition and the iron loss at open circuit condition, if the torque demand is below 5% of the peak torque.

## BRIEF DESCRIPTION OF THE DRAWINGS

Reference will be made to embodiments of the invention, examples of which may be illustrated in accompanying figures. These figures are intended to be illustrative, not limiting. Although the invention is generally described in context of these embodiments, it should be understood that it is not intended to limit the scope of the invention to these particular

EP 4 060 890 A1

embodiments.

Figure 1 illustrates a block diagram for a system for control of a synchronous machine in accordance with an embodiment of the invention.

Figure 2 illustrates a method for control of the synchronous machine in accordance with an embodiment of the invention.

Figure 3 illustrates a block diagram for initialisation and implementation of a flux linkage estimation module in the system for control of a synchronous machine in accordance with an embodiment of the invention.

Figure 4 illustrates a method for estimating flux linkage in the synchronous machine in accordance with an embodiment of the invention.

Figure 5 illustrates a block diagram for initialisation and implementation of an iron loss estimation module in the system for control of a synchronous machine in accordance with an embodiment of the invention.

Figure 6 illustrates a method for estimating iron loss in the synchronous machine in accordance with an embodiment of the invention.

## DETAILED DESCRIPTION OF THE INVENTION

The present invention relates to a system for controlling a synchronous machine and a method thereof.

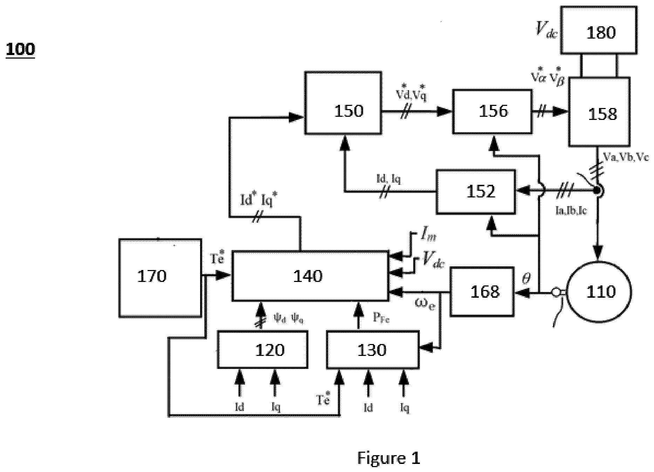

Figure 1 illustrates a block diagram for a system 100 for controlling a synchronous machine 110. As illustrated in Figure 1, the system 100 for controlling the synchronous machine 110 has a flux linkage estimation module 120. The flux linkage estimation module 120 estimates one or more values of flux linkage ($\Psi$) in the synchronous machine 110. The flux linkage estimation module 120 makes use of a regression-based model for estimating flux linkage. The system 100 further has an iron loss estimation module 130 for estimating one or more values of iron loss ($P_{Fe}$) in the synchronous machine 110. A control module 140 receives the one or more values of flux linkage from the flux linkage estimation module 120 and the one or more values of iron loss from the iron loss estimation module 130, and subsequently determines optimum current set points along a direct axis ($I_d^*$) and a quadrature axis of a rotor of the synchronous machine ($I_q^*$) based on the values of flux linkage and iron loss. The optimum current set points are then utilised for controlling the synchronous machine 110. In an embodiment of the invention, the synchronous machine 110 is an Interior Permanent Magnet Synchronous Motor (IPMSM) which is driven by a DC source 180. In another embodiment of the invention, the IPMSM is adapted for an electrical vehicle application.

As further illustrated in Figure 1, in an embodiment of invention, the control module 140 takes inputs from the flux linkage estimation module 120, the iron loss estimation module 130 and an operation target command generator module 170. The operation target command generator module 170 generates a desired torque requirement/demand ($T_e^*$) for a particular drive condition of the IPMSM. The control module 140 further receives inputs of the maximum current ($I_m$) of the synchronous machine 110, maximum voltage ($V_{dc}$) of the DC source 180 and the instant angular speed of the rotor of the synchronous machine ($\omega_e$) through a speed computing unit 168, and based on all the aforementioned inputs, the control module 140 generates the optimum current set points at an instant for driving the synchronous machine 110.

In an embodiment of the invention as illustrated in Figure 1, the system 100 further has a voltage command generator 150 for converting the determined optimum current set point along the direct axis and quadrature axis of the rotor ($I_d^*$, $I_q^*$) into an optimum voltage set point along the direct axis and quadrature axis of the rotor ($V_d^*$, $V_q^*$). Thereafter, a third co-ordinate converter 156 of the system 100 converts the optimum voltage set point ($V_d^*$, $V_q^*$) into an optimum voltage set point in an alpha-beta frame ($V_\alpha^*$, $V_\beta^*$). Further, the system has a Space Vector Pulse Width Modulation Power Converter 158 configured to receive the optimum voltage set point in the alpha-beta frame ($V_\alpha^*$, $V_\beta^*$) for driving the synchronous machine 110 via the DC power supply 180 by converting the said input of ($V_\alpha^*$, $V_\beta^*$) into a threephase input of voltage along first-phase, second-phase and third-phase ($V_a$, $V_b$, $V_c$) for the synchronous machine 110.

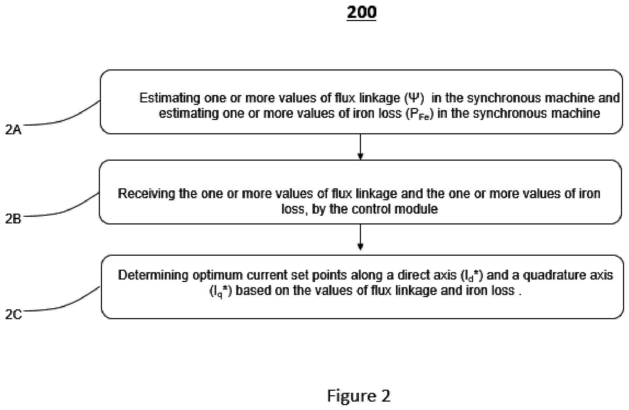

Correspondingly, a method 200 for controlling the synchronous machine 110 has been illustrated in Figure 2. In step 2A, one or more values of flux linkage ($\Psi$) in the synchronous machine 110 based on a regression-based model are estimated by the flux linkage estimation module 120 (shown in Fig.1). Further, one or more values of iron loss ($P_{Fe}$) in the synchronous machine are estimated by the iron loss estimation module 130 (shown in Fig.1). In step 2B, the one or more values of flux linkage from the flux linkage estimation module 120 and the one or more values of iron loss from the iron loss estimation module 130 are received by the control module 140 (shown in Fig.1). In step 2C, optimum current set points along a direct axis ($I_d^*$) and a quadrature axis ($I_q^*$) based on the values of flux linkage and iron loss for controlling the synchronous machine 110 are determined by the control module 140 thereby driving the synchronous machine 110.

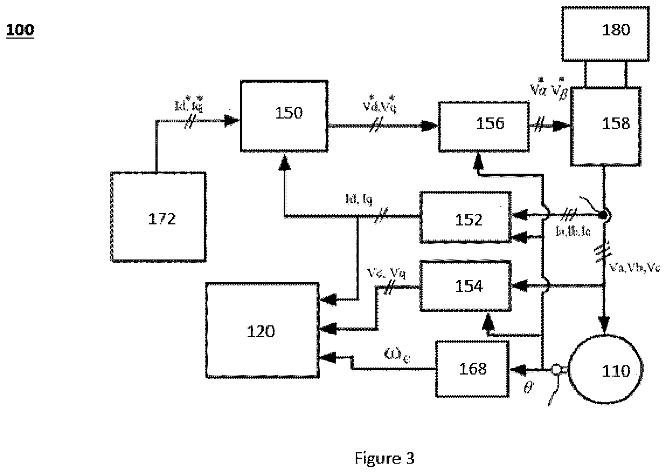

Figure 3 illustrates a block diagram for initialization and implementation of the flux linkage estimation module 120 in the system 100 for controlling the synchronous machine 110. As illustrated in Figure 3, the flux linkage estimation module 120, during the operation of the synchronous machine 110, receives input values of current in the direct axis

($I_d$) of the rotor and current in the quadrature axis ($I_q$) of the rotor from a first co-ordinate converter 152. The first coordinate converter 152 converts a combination of input values of current in first phase in the synchronous machine 110 ($I_a$), second phase in the synchronous machine 110 ($I_b$), and third phase in the synchronous machine 110 ($I_e$) into the combination of input values of current in the direct axis ($I_d$) of the rotor and current in the quadrature axis ($I_q$) of the rotor. The flux linkage estimation module 120, during the operation of the synchronous machine 110 further receives values of voltage in the direct axis ($V_d$) of the rotor and voltage in the quadrature axis ($V_q$) of the rotor from a second co-ordinate converter 154. The second coordinate 154 converter converts a combination of input values of voltage in first phase in the synchronous machine 110 ($V_a$), second phase in the synchronous machine 110 ($V_b$), and third phase in the synchronous machine 110 ($V_c$) into the combination of input values of voltage in the direct axis ($V_d$) of the rotor and voltage in the quadrature axis ($V_q$) of the rotor. The flux linkage estimation module 120 further receives the input of instant angular speed of the rotor of the synchronous machine 110 ($\omega_e$) through the speed computing unit 168, and based on all of the aforementioned inputs estimates the values of flux linkage in the direct axis of the rotor ($\Psi d$) and quadrature axis of the rotor ($\Psi_q$).

As mentioned earlier, the flux linkage estimation module 120 is based on a regression-based model. As is known, regression-based models predict the outcome of the dependent variables from the independent variables and need to be trained before they are implemented. In an embodiment of the invention, a Polynomial regression model has been adopted to estimate values of flux linkage in d-axis ($\Psi d$) and q-axis ($\Psi_q$) of the rotor of the synchronous machine 110 and, values of inductance in d-axis ($L_d$) and q-axis ($L_q$) of the rotor of the synchronous machine 110. For the purpose of the present invention, considering that the values of flux linkage in the d-axis and q-axis contain the information of saturation and cross-saturation, the relationship between flux linkage and stator current in the rotating d-q coordinate system is given as

$$\psi_d\left(i_d, i_q\right) = L_{dd}\left(i_d, i_q\right)i_d + L_{dq}\left(i_d, i_q\right)i_q + \psi_m\left(i_d, i_q\right)$$

$$\psi_q\left(i_d, i_q\right) = L_{qd}\left(i_d, i_q\right)i_d + L_{qq}\left(i_d, i_q\right)i_q$$

where $\Psi_d$ and $\Psi_q$ respectively denote the flux linkage along d-axis, q-axis of the rotor of the synchronous machine 110, and $\Psi_m$ denotes flux linkage in permanent magnet of the synchronous machine 110 affected by d-axis current and q-axis current. Further, $L_{dd}$, $L_{qq}$ denote self-inductance of the synchronous machine 110 in d-axis and q-axis and $L_{dq}$, $L_{qd}$ denote mutualinductance. The relationship between mutual inductance and flux is explained as

$$L_{dd}\left(i_d, i_q\right) = \frac{\left(\psi_d\left(i_d, i_q\right) - \psi_m\left(i_d, i_q\right)\right)}{i_d}$$

$$L_{qq}\left(i_d, i_q\right) = \frac{\psi_q\left(i_d, i_q\right)}{i_q}$$

$$L_{dq}\left(i_d, i_q\right) = \frac{\left(\psi_d\left(i_d, i_q\right) - \psi_m\left(i_d, i_q\right)\right)}{i_q}$$

$$L_{qd}\left(i_d, i_q\right) = \frac{\psi_q\left(i_d, i_q\right)}{i_d}$$

As mentioned earlier, the regression-based model needs to be trained before the operation of the synchronous machine 110 for the same to be implemented during the operation of the synchronous machine 110. For training the regression-based model of the flux linkage estimation module 120, as illustrated in Figure 3, a first target command generator 172 generates one or more training values of flux linkage in the direct-axis ($\Psi_d$) of a rotor (not shown) of the synchronous machine 110 and one or more training values of flux linkage in the quadrature-axis ($\Psi_q$) of the rotor of the synchronous machine 110, in a steady state prior to operation of the synchronous machine 110. In an embodiment of the invention, the training values of flux linkage in the direct-axis ($\Psi_d$) and the training values of flux linkage in the quadrature-axis ($\Psi_q$) are based on the training values of flux linkage corresponding to six distinct equally distributed values of current in the quadrature axis ($I_q$) of the rotor and five distinct equally distributed values of current in the direct axis ($I_d$) of the rotor, in the steady state prior to operation of the synchronous machine 110.

The six distinct equally distributed values of current in the quadrature axis ($I_q$) of the rotor and five distinct equally distributed values of current in the direct axis ($I_d$) of the rotor, provide 30 distinct operating points for training of the regression-based model of the flux linkage estimation module 120. The distinct values of $I_d$ and $I_q$ for training are fed to the flux linkage estimation module 120 through the voltage command generator 150, the SVPWM power converter 158, the first coordinate converter 152 and the second coordinate converter 154.

The 30 distinct operating points of $I_d$ and $I_q$ have corresponding values of $V_d$ and $V_q$, and the flux linkage at these operating points in the steady state is calculated based on:

$$\psi_d = \frac{V_q - R_s I_q}{\omega_e} , \quad \psi_q = \frac{R_s I_d - V_d}{\omega_e}$$

The regression model is hence, trained by feeding values of the independent and the dependent variable into the model. The trained regression based model is then used to estimate the values of flux linkage during operation of the synchonous machine 110. The error in the estimation of values of flux linkage in the d-axis and q-axis using the trained regression-based model is as low as $8.5 \times 10^{-3}\%$ and $2.7 \times 10^{-3}\%$ respectively.

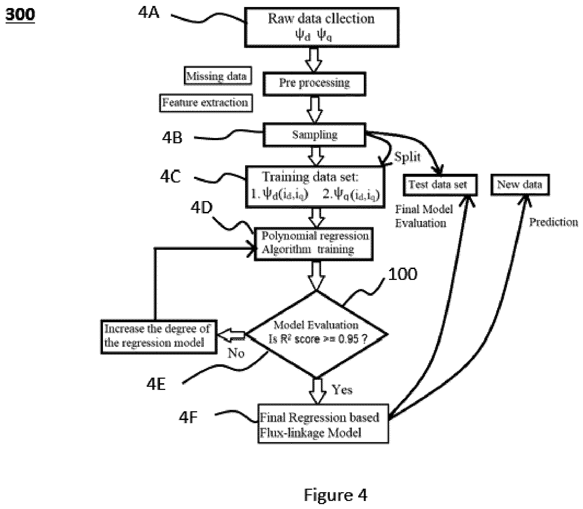

Correspondingly, a method 300 for estimating flux linkage for the synchronous machine 110 has been illustrated in Figure 4. The method involves the steps mentioned hereinafter. In step 4A, one or more training values of flux linkage in a direct axis ($\Psi d$) of the rotor of the synchronous machine, and one or more training values of flux linkage in a quadrature axis of the rotor of the synchronous machine ($\Psi_q$) based on six distinct equally distributed values of rotor current in the quadrature axis ($I_q$) and five distinct equally distributed values of rotor current in the direct axis ($I_d$) are received by the flux linkage estimation module 120 (shown in Fig.3), in a steady state prior to operation of the synchronous machine 110 (shown in Fig.3). In step 4B, the training values of flux linkage are sampled by the flux linkage estimation module 120. In step 4C, the sampled training values are split into a first training data set with known training values of flux linkage in the direct axis ($\Psi_d$) corresponding to values of rotor current ($I_d$, $I_q$), and a second training data set with known training values of flux linkage in the quadrature axis ($\Psi_q$) corresponding to values of rotor current ($I_d$, $I_q$), by the flux linkage estimation module 120. Then, in step 4D, the first training data set and the second training data set are used to train the regression-based model, by the flux linkage estimation module 120. In step 4E, the regression-based model is evaluated for quality of training based on an $R^2$ score, by the flux linkage estimation module 120. If the $R^2$ score of the model is above a certain level, for instance 0.95, the method moves forward, otherwise the method reverts back to step 4D and the degree of regression-based model is increased.

Finally, in step 4F, during operation of the synchronous machine 110, based on the regression-based model, one or more values of flux linkage in the direct axis of the rotor ($\Psi d$) and one or more values of flux linkage in the quadrature axis of the rotor ($\Psi_q$) are estimated for a combination of input values of rotor current the direct axis ($I_d$) and rotor current in the quadrature axis ($I_q$), by the flux linkage estimation module 120.

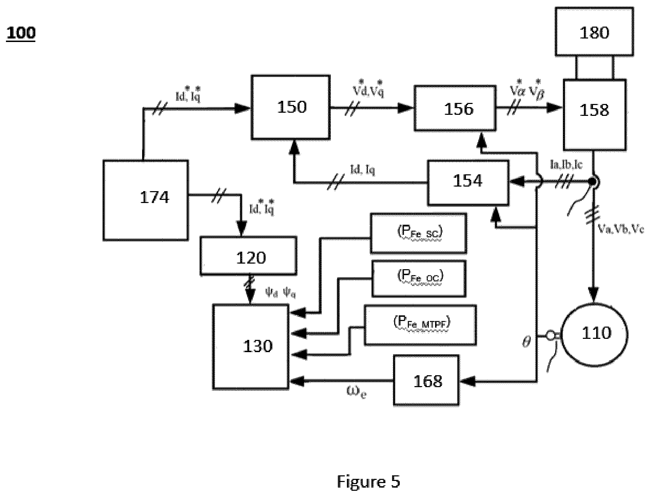

Figure 5 illustrates a block diagram for initialization and implementation of the iron loss estimation module 130 in the system 100 (shown in Fig.1) for controlling the synchronous machine 110. As illustrated in Figure 5, the iron loss estimation module 130 receives the inputs of value of an iron loss at short circuit condition ($P_{Fe\_SC}$), value of an iron loss at open circuit condition ($P_{Fe\_OC}$), and value of an iron loss at base speed MTPF (Maximum Torque Per Flux) condition ($P_{Fe\_MTPF}$) to represent iron loss associated with magnetizing flux path. A second target command generator 174 generates the input commands for generation of values $I_d$ and $I_q$ for calculation of iron loss at various operating points for the initialisation of the iron loss estimation module 130. Herein, the iron loss at open circuit condition is generated by running the synchronous machine 110 at no load condition at base speed wherein $I_d$ and $I_q$ are zero. Further, the iron loss at short circuit condition is generated by running the synchronous machine 110 at short circuit condition at base speed wherein $I_d$ is taken as the negative value of the maximum current in the direct axis of the rotor ($I_{dmax}$) and $I_q$ is zero. Furthermore, the iron loss at MTPF condition is generated by running the synchronous machine 110 at base speed wherein $I_d$ is taken as the negative value of the maximum current in the direct axis of the rotor ($I_{dmax}$) and $I_q$ is taken as the value of the maximum current in the quadrature axis of the rotor ($I_{qmax}$). The iron loss module further receives the input of instant angular speed of the rotor of the synchronous machine 110 ($\omega_e$) through the speed computing unit 168, and the values of flux linkage in d-axis ($\Psi d$) and flux linkage in q-axis ($\Psi_q$) from the flux linkage estimation module 120.

The iron loss functions can be described as:

$$P_{Fe\_oc} = a_h \left( \frac{V_m}{2\pi\psi_m} \right) + a_e \left( \frac{V_m}{2\pi\psi_m} \right)^2 + a_x \left( \frac{V_m}{2\pi\psi_m} \right)^{1.5}$$

$$P_{Fe\_sc} = b_h \left(\frac{V_{da}}{2\pi\psi_m}\right) + b_e \left(\frac{V_{da}}{2\pi\psi_m}\right)^2 + b_x \left(\frac{V_{da}}{2\pi\psi_m}\right)^{1.5}$$

$$P_{Fe\_MTPF} = c_h \left(\frac{V_{mf}}{2\pi\psi_m}\right) + c_e \left(\frac{V_{mf}}{2\pi\psi_m}\right)^2 + c_x \left(\frac{V_{mf}}{2\pi\psi_m}\right)^{1.5}$$

Where, the coefficients $(a_h, a_e, a_x)$, $(b_h, b_e, b_x)$ and $(c_h, c_e, c_x)$ are determined by measurement data at open-circuit, short circuit and MTPF operations, respectively.

As mentioned hereinabove, the requisite values of $V_m$, $V_{da}$ and $V_{mf}$ for calculations of iron loss are calculated as:

$$V_m = \omega_e \sqrt{\psi_{d\_oc}^2 + \psi_{q\_oc}^2}$$

$$V_{da} = -\omega_e \left(\psi_{d\_sc} - \psi_m\right) \qquad \dots\dots (7)$$

$$V_{mf} = \omega_e \sqrt{\psi_{d\_MTPF}^2 + \psi_{q\_MTPF}^2}$$

Where $\psi_{d\text{-MTPF}}$, and $\psi_{q\text{-MTPF}}$ are the d-axis and q-axis flux linkage at MTPF condition at base speed, obtained from the flux linkage estimation module 120.

For any given operating point of the synchronous machine 110, the iron loss is the sum of $P_{Fe\_oc}$ and $P_{Fe\_SC}$ or $P_{Fe\_MTPF}$ and $P_{Fe\_sc}$. In the implementation of the iron loss estimation module 130 in the system 100 for control of the synchronous machine 110, the iron loss estimation module 130 also receives input from the operation target command generator 170 (shown in Fig. 1) for the torque demand at the instant operating point ($T_e^*$). The iron loss estimation module 130 estimates the iron loss based on the value of iron loss at short circuit condition ($P_{Fe\_SC}$), and the value of iron loss at base speed MTPF condition ($P_{Fe\_MTPF}$), if a torque demand is greater than 5% of a peak torque ($T_e^{peak}$) of the synchronous machine 110. Alternatively, the iron loss estimation module 130 estimates the iron loss based on the value of the iron loss at short circuit condition ($P_{Fe\_SC}$), and the value of iron loss at open circuit condition ($P_{Fe\_OC}$), if the torque demand ($T_e^*$) is less than 5% of the peak torque ($T_e^{peak}$) of the synchronous machine 110. The relative error in the estimation of the iron loss is only 2-4% in the torque speed region where the synchronous machine is continuously operating.

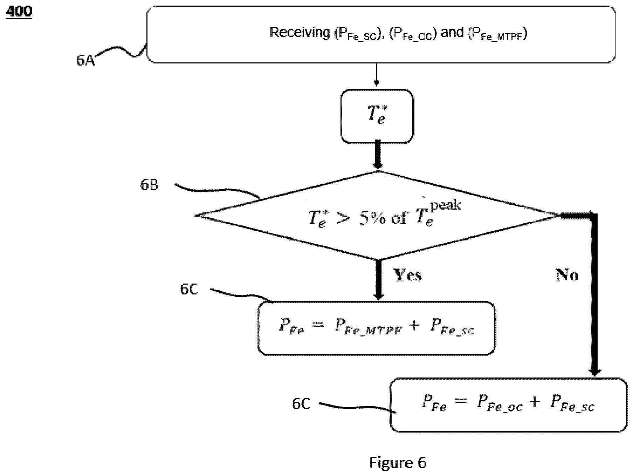

Correspondingly, a method 400 for estimating iron loss in the synchronous machine 110 (shown in Fig.5) has been illustrated in Figure 6. The method 400 involves the method steps mentioned hereinafter. In step 6A, values of an iron loss at short circuit condition ($P_{Fe\_SC}$), an iron loss at open circuit condition ($P_{Fe\_OC}$), and an iron loss at base speed MTPF (Maximum Torque Per Flux) condition ($P_{Fe\_MTPF}$) are received by the iron loss estimation module 130 (shown in Fig.5). In step 6B, whether the torque demand ($T_e^*$) is above or below 5% of the peak torque ($T_e^{peak}$) of the synchronous machine 110 is checked by the iron loss estimation module 130. Based on the result of step 6B, in step 6C, if the value of torque demand ($T_e^*$) is above 5% of the peak torque ($T_e^{peak}$), iron loss is estimated based on values of the iron loss at short circuit condition ($P_{Fe\_SC}$) and the iron loss at base speed MTPF condition ($P_{Fe\_MTPF}$) by the iron loss estimation module 130. Alternatively, in step 6C, if the value of torque demand ($T_e^*$) is below 5% of the peak torque ($T_e^{peak}$), iron loss is estimated based on values of the iron loss at short circuit condition ($P_{Fe\_SC}$) and the iron loss at open circuit condition ($P_{Fe\_OC}$) by the iron loss estimation module 130.

Finally, the initialized flux linkage estimation module and the initialized iron loss estimation module, when implemented in the system for control of the synchronous machine, the control module determines the optimum current set points for a given torque demand. The control of the synchronous machine based on MTPA is realized by:

$$T = \frac{3}{4}P\left[\psi_m i_q + \left(L_d - L_q\right)i_d i_q\right]$$

Wherein T is torque corresponding to Maximum Torque Per Ampere control and P is the number of pole pairs in the synchronous machine.

Advantageously, the present invention provides a system and method for control of a synchronous machine with a highly accurate flux linkage estimation module which accounts for the effect of saturation and cross coupling in real time operating conditions of the synchronous machine. Further, the proposed iron loss estimation module can estimate iron loss for high speed, high power IPMSMs with low complexity based on only three measurement points data. The low computation time and low memory usage required for flux linkage and iron loss estimation for control of the synchronous machine in accordance with the present invention leads to fast dynamic responses to torque demands, making the present system suitable for electric vehicle application.

In the present invention, the error in flux linkage estimation is within 1% and error in iron loss estimation error is within 4%, which is highly necessary during MTPA control realization to drive the machine for different torque requirements.

Further, the methods suggested in the present invention are easy to realise in real time operating conditions of the synchronous machine and the suggested methods can be applied for control and characterization of the synchronous machine without requiring any information about the geometry and magnet disposition in the rotor.

While the present invention has been described with respect to certain embodiments, it will be apparent to those skilled in the art that various changes and modification may be made without departing from the scope of the invention as defined in the following claims.

**Claims**

1. A system (100) for controlling a synchronous machine (110), comprising:

   a flux linkage estimation module (120) for estimating one or more values of flux linkage ($\Psi$) in the synchronous machine (110) based on a regression-based model;
   an iron loss estimation module (130) for estimating one or more values of iron loss ($P_{Fe}$) in the synchronous machine (110); and
   a control module (140) for receiving the one or more values of flux linkage ($\Psi$) from the flux linkage estimation module (120) and the one or more values of iron loss ($P_{Fe}$) from the iron loss estimation module (130), and determining optimum current set points along a direct axis ($I_d*$) and a quadrature axis ($I_q*$) based on the values of flux linkage ($\Psi$) and iron loss ($P_{Fe}$) thereby controlling the synchronous machine (110).

2. The system (100) as claimed in claim 1, wherein the synchronous machine (110) is an Interior Permanent Magnet Synchronous Motor.

3. The system (100) as claimed in claim 1, wherein the flux linkage estimation module (120) based on the regression-based model is trained using one or more training values of flux linkage in the direct-axis ($\Psi_d$) of a rotor of the synchronous machine (110) and one or more training values of flux linkage in the quadrature-axis ($\Psi_q$) of the rotor of the synchronous machine (110), in a steady state prior to operation of the synchronous machine (112).

4. The system (100) as claimed in claim 3, wherein the training values of flux linkage in the direct-axis ($\Psi d$) and the training values of flux linkage in the quadrature-axis ($\Psi_q$) are based on the training values of flux linkage ($\Psi$) corresponding to six distinct equally distributed values of current in the quadrature axis ($I_q$) of the rotor and five distinct equally distributed values of current in the direct axis ($I_d$) of the rotor, in a steady state prior to operation of the synchronous machine (110).

5. The system (100) as claimed in claim 3, wherein, during operation of the synchronous machine (110), the flux linkage estimation module (120) estimates the values of flux linkage in the direct-axis ($\Psi_d$) and the values of flux linkage in the quadrature-axis ($\Psi_q$) for a combination of input values of current in the direct axis ($I_d$) of the rotor and current in the quadrature axis ($I_q$) of the rotor.

6. The system (100) as claimed in claim 1, wherein the iron loss estimation module (130) estimates the iron loss ($P_{Fe}$) based on at least two out of:
   value of an iron loss at short circuit condition ($P_{Fe\_SC}$), value of an iron loss at open circuit condition ($P_{Fe\_OC}$), and value of an iron loss at base speed MTPF (Maximum Torque Per Flux) condition ($P_{Fe\_MTPF}$).

7. The system (100) as claimed in claim 6, wherein the iron loss estimation module (130) estimates the iron loss ($P_{Fe}$) based on: the value of iron loss at short circuit condition ($P_{Fe\_SC}$), and the value of iron loss at base speed MTPF condition ($P_{Fe\_MTPF}$), if a torque demand ($T_e*$) is greater than 5% of a peak torque ($T_e^{peak}$) of the synchronous machine (110).

8. The system (100) as claimed in claim 6, wherein the iron loss estimation module (130) estimates the iron loss ($P_{Fe}$) based on: the value of the iron loss at short circuit condition ($P_{Fe\_SC}$), and the value of iron loss at open circuit condition ($P_{Fe\_OC}$), if the torque demand ($T_e^*$) is less than 5% of the peak torque ($T_e^{peak}$) of the synchronous machine (110).

9. The system (110) as claimed in claims 5 and 6, comprising a first coordinate converter (152) for converting a combination of input values of current in a first phase in the synchronous machine ($I_a$), a second phase in the synchronous machine ($I_b$), and a third phase in the synchronous machine ($I_e$) into the combination of input values of current in the direct axis ($I_d$) of the rotor and current in the quadrature axis ($I_q$) of the rotor.

10. The system (100) as claimed in claim 5, comprising a second co-ordinate converter (154) for converting a combination of input values of voltage in a first phase in the synchronous machine ($V_a$), a second phase in the synchronous machine ($V_b$), and a third phase in the synchronous machine ($V_c$) into a combination of input values of voltage in the direct axis ($V_d$) of the rotor and current in the quadrature axis ($V_q$) of the rotor.

11. The system (100) as claimed in claim 1, comprising a voltage command generator (150) for converting the determined optimum current set point ($I_d^*$, $I_q^*$) into an optimum voltage set point ($V_d^*$, $V_q^*$).

12. The system (100) as claimed in claim 11, comprising a third co-ordinate converter (156) for converting the optimum voltage set point ($V_d^*$, $V_q^*$) into an optimum voltage set point in an alpha-beta frame ($V_\alpha^*$, $V_\beta^*$).

13. The system (100) as claimed in claim 12, comprising a Space Vector Pulse Width Modulation Power Converter (158) configured to: receive the optimum voltage set point ($V_\alpha^*$, $V_\beta^*$) for driving the synchronous machine via a DC power supply (180).

14. A method (200) for control of a synchronous machine (110), comprising the steps of:

   estimating, by a flux linkage estimation module (120), one or more values of flux linkage ($\Psi$) in the synchronous machine (110) based on a regression-based model;
   estimating, by an iron loss estimation module (130), one or more values of iron loss ($P_{Fe}$) in the synchronous machine (110);
   receiving, by a control module (140), the one or more values of flux linkage ($\Psi$) from the flux linkage estimation module (120) and the one or
   more values of iron loss ($P_{Fe}$) from the iron loss estimation module (130); and
   determining, by the control module (140), optimum current set points along a direct axis ($I_d^*$) and a quadrature axis ($I_q^*$) based on the values of flux linkage ($\Psi$) and iron loss ($P_{Fe}$) thereby controlling the synchronous machine (110).

15. A method (300) for estimating flux linkage in a synchronous machine (110), comprising the steps of:

   receiving, by a flux linkage estimation module (120), one or more training values of flux linkage in a direct axis ($\Psi$d) of a rotor of the synchronous machine (110), and one or more training values of flux linkage in a quadrature axis ($\Psi_q$) of the rotor of the synchronous machine (110) based on six distinct equally distributed values of rotor current in the quadrature axis ($I_q$) and five distinct equally distributed values of rotor current in the direct axis ($I_d$), in a steady state prior to operation of the synchronous machine (110);
   sampling, by the flux linkage estimation module (120), the training values of flux linkage (($\Psi$);
   splitting the sampled training values, by the flux linkage estimation module (120), into a first training data set with known training values of flux linkage in the direct axis ($\Psi$d) corresponding to values of rotor current ($I_d$, $I_q$), and a second training data set with known training values of flux linkage in the quadrature axis ($\Psi_q$) corresponding to values of rotor current ($I_d$, $I_q$);
   using the first training data set and the second training data set to train a regression-based model, by the flux linkage estimation module (120);
   evaluating the regression-based model based on an R score, by the flux linkage estimation module (120); and
   estimating, by the flux linkage estimation module (120), during operation of the synchronous machine (110), based on the regression-based model, one or more values of flux linkage in the direct axis of the rotor ($\Psi_d$) and one or more values of flux linkage in the quadrature axis of the rotor ($\Psi_q$) for a combination of input values of rotor current the direct axis ($I_d$) and rotor current in the quadrature axis ($I_q$).

**16.** A method (400) for estimating iron loss in a synchronous machine (110), comprising the steps of:

receiving, by an iron loss estimation module (130), values of an iron loss at short circuit condition ($P_{Fe\_SC}$), an iron loss at open circuit condition ($P_{Fe\_OC}$), and an iron loss at base speed MTPF (Maximum Torque Per Flux) condition ($P_{Fe\_MTPF}$);

checking, by the iron loss estimation module (130), whether a torque demand ($T_e^*$) is above or below 5% of a peak torque ($T_e^{peak}$) of the synchronous machine;

if the torque demand ($T_e^*$) is above 5% of the peak torque ($T_e^{peak}$), estimating, by the iron loss estimation module (130), iron loss ($P_{Fe}$) based on values of the iron loss at short circuit condition ($P_{Fe\_SC}$) and the iron loss at base speed MTPF condition ($P_{Fe\_MTPF}$); and

if the torque demand ($T_e^*$) is below 5% of the peak torque ($T_e^{peak}$), estimating, by the iron loss estimation module (130), iron loss ($P_{Fe}$) based on values of the iron loss at short circuit condition ($P_{Fe\_SC}$) and the iron loss at open circuit condition ($P_{Fe\_OC}$).

100

Figure 1

**200**

Estimating one or more values of flux linkage ($\Psi$) in the synchronous machine and estimating one or more values of iron loss ($P_{Fe}$) in the synchronous machine

2A

Receiving the one or more values of flux linkage and the one or more values of iron loss, by the control module

2B

Determining optimum current set points along a direct axis ($I_d$*) and a quadrature axis ($I_q$*) based on the values of flux linkage and iron loss .

2C

Figure 2

Figure 3

**300**

Figure 4

**100**

Figure 5

**400**

Receiving $(P_{Fe\_SC})$, $(P_{Fe\_OC})$ and $(P_{Fe\_MTPF})$

6A

$$T_e^*$$

6B

$$T_e^* > 5\% \text{ of } T_e^{peak}$$

**Yes**      **No**

6C

$$P_{Fe} = P_{Fe\_MTPF} + P_{Fe\_sc}$$

6C

$$P_{Fe} = P_{Fe\_oc} + P_{Fe\_sc}$$

Figure 6

## EUROPEAN SEARCH REPORT

Application Number

EP 22 16 0997

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HISHAM ELDEEB ET AL: "On the optimal feedforward torque control problem of anisotropic synchronous machines: Quadrics, quartics and analytical solutions", ARXIV.ORG, CORNELL UNIVERSITY LIBRARY, 201 OLIN LIBRARY CORNELL UNIVERSITY ITHACA, NY 14853, 5 November 2016 (2016-11-05), XP081152761, DOI: 10.1080/00207179.2017.1338359 | 1,2,14 | INV. H02P21/13 H02P21/02 |
| Y | * title; page 1 * * chapter: Introduction; page 2, paragraph 2nd * * chapter: Introduction; page 2, paragraph 3rd * ----- | 3-13,15, 16 | |
| Y | ORTOMBINA LUDOVICO ET AL: "Magnetic Modeling of Synchronous Reluctance and Internal Permanent Magnet Motors Using Radial Basis Function Networks", IEEE TRANSACTIONS ON INDUSTRIAL ELECTRONICS, vol. 65, no. 2, February 2018 (2018-02), pages 1140-1148, XP055950797, USA ISSN: 0278-0046, DOI: 10.1109/TIE.2017.2733502 * chapter: "IV. RBF network training"; page 1143, left-hand column; figures 2,3 * ----- -/-- | 3-5, 9-13,15 | TECHNICAL FIELDS SEARCHED (IPC) H02P |

The present search report has been drawn up for all claims

| Place of search | Date of completion of the search | Examiner |
|---|---|---|
| Munich | 12 August 2022 | Fligl, Stanislav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

## EUROPEAN SEARCH REPORT

**Application Number**

EP 22 16 0997

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | XIBO YUAN ET AL: "Torque Distribution Strategy for a Front- and Rear-Wheel-Driven Electric Vehicle", IEEE TRANSACTIONS ON VEHICULAR TECHNOLOGY, IEEE, USA, vol. 61, no. 8, October 2012 (2012-10), pages 3365-3374, XP011481316, ISSN: 0018-9545, DOI: 10.1109/TVT.2012.2213282 * equation 6; page 3367, right-hand column, paragraph 3rd * | 6-8,16 | |
| | | | **TECHNICAL FIELDS SEARCHED (IPC)** |

The present search report has been drawn up for all claims

| Place of search | Date of completion of the search | Examiner |
|---|---|---|
| Munich | 12 August 2022 | Fligl, Stanislav |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)